# FASCICULE DE BREVET EUROPEEN

(11) **EP 3 558 817 B1**
(45) Date de publication et mention de la délivrance du brevet: **09.09.2020**
(21) Numéro de dépôt: 17822226.1
(22) Date de dépôt: 13.12.2017
(51) Int. Cl.: B64C 13/50

(54) **ACTIONNEUR ELECTROMECANIQUE DE SURFACE MOBILE DE VOL**
ELEKTROMECHANISCHER AKTUATOR FÜR EINE BEWEGLICHE FLUGOBERFLÄCHE
ELECTROMECHANICAL ACTUATOR FOR A MOVABLE FLIGHT SURFACE

(30) Priorité: 23.12.2016 FR 1663333
(43) Date de publication de la demande: 30.10.2019
(73) Titulaire: Safran Electronics & Defense, 92100 Boulogne-Billancourt (FR)
(72) Inventeur: JONCOUR, Yvon, 92100 Boulogne-Billancourt (FR)
(74) Mandataire: Lavialle, Bruno François Stéphane
(86) Numéro de dépôt international: PCT/EP2017/082710
(87) Numéro de publication internationale: WO 2018/114545

(56) Documents cités:
- EP-A1- 2 927 113
- WO-A1-2015/189424
- WO-A2-2011/157834
- DE-A1- 3 522 392
- DE-A1-102011 114 222
- US-B1- 6 705 570

## Description

La présente invention concerne les surfaces mobiles de vol des aéronefs et leur actionnement.

### ETAT DE LA TECHNIQUE

Un aéronef, par exemple un avion, comprend généralement une structure principale (le fuselage, les ailes, l'empennage fixe) et des surfaces mobiles de vol (ailerons, spoilers, gouvernes de profondeur, gouvernes de direction...) articulées à la structure pour pouvoir être commandées en position de manière à permettre de diriger l'aéronef. La surface mobile comprend une structure rigide portant un revêtement pour définir l'enveloppe de la surface mobile. Le déplacement de chaque surface mobile de vol dans la position désirée est réalisé au moyen d'un ou plusieurs actionneurs ayant une partie fixe montée dans la structure de l'aéronef et une partie mobile reliée à la surface mobile de vol.

Il est de plus en plus habituel d'utiliser sur les aéronefs des actionneurs électriques agencés pour produire un travail mécanique lorsqu'ils sont alimentés en énergie électrique. Un tel actionneur comprend le dispositif électromécanique de production d'effort, un circuit de puissance alimentant en énergie électrique le dispositif électromécanique de production d'effort et un circuit de commande qui pilote le circuit de puissance et qui est destiné à être relié à un calculateur de vol de l'aéronef. Le calculateur de vol reçoit des informations des instruments de commande manipulés par le pilote et de divers capteurs répartis dans l'aéronef et élabore à partir de ces informations des signaux d'instruction envoyés au circuit de commande de chaque actionneur.

Le dispositif électromécanique de production d'effort, le circuit de puissance et le circuit de commande sont tous trois reçus dans un logement ménagé dans la structure principale de l'aéronef.

Dans certaines applications, il serait préférable d'utiliser deux moteurs électriques pour déplacer une même surface mobile. Or, il apparaît que l'actionnement électromécanique d'une surface mobile au moyen de deux moteurs électriques engendre sur la surface mobile des contraintes qui n'existent pas avec un actionnement par deux actionneurs hydrauliques. WO2015/189424 A1 décrit un actionneur pour surface de vol.

### OBJET DE L'INVENTION

Un but de l'invention est de fournir un moyen pour améliorer l'actionnement des surfaces mobiles de vol dans un aéronef.

### BREF EXPOSE DE L'INVENTION

A cet effet, on prévoit, selon l'invention, un dispositif électromécanique d'actionnement d'une surface mobile de vol ayant une enveloppe articulée à une structure d'un aéronef autour d'un axe de rotation, comprenant :
- au moins deux moteurs électriques pour entraîner l'enveloppe en rotation autour de l'axe de rotation,
- un circuit de puissance et un circuit de commande pour alimenter et commander chacun des moteurs,
- un dispositif de limitation d'efforts antagonistes exercés par l'intermédiaire des moteurs électriques.

Selon un mode de réalisation avantageux, le dispositif de limitation comprend un circuit de détection agencé pour déterminer l'amplitude et le sens d'une résultante des efforts antagonistes afin de permettre une action correctrice des circuits de commande des moteurs en fonction de cette résultante.

Ainsi, les moteurs peuvent être pilotés pour réduire cette résultante.

De préférence, le circuit de détection est relié à des jauges de contraintes qui sont fixées sur une platine sur laquelle sont fixés les stators des moteurs ; ou les jauges de contraintes sont fixées sur un barreau liant entre eux et en rotation les rotors des moteurs.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :

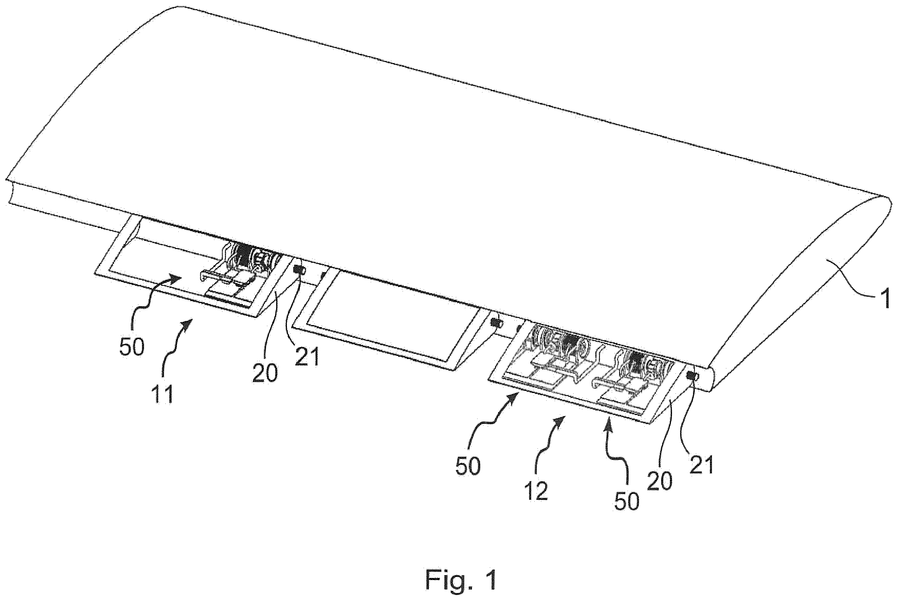

- la figure 1 est une vue schématique partielle, en perspective et avec écorchés, d'une aile pourvue de surfaces mobiles de vol conformes à l'invention ;

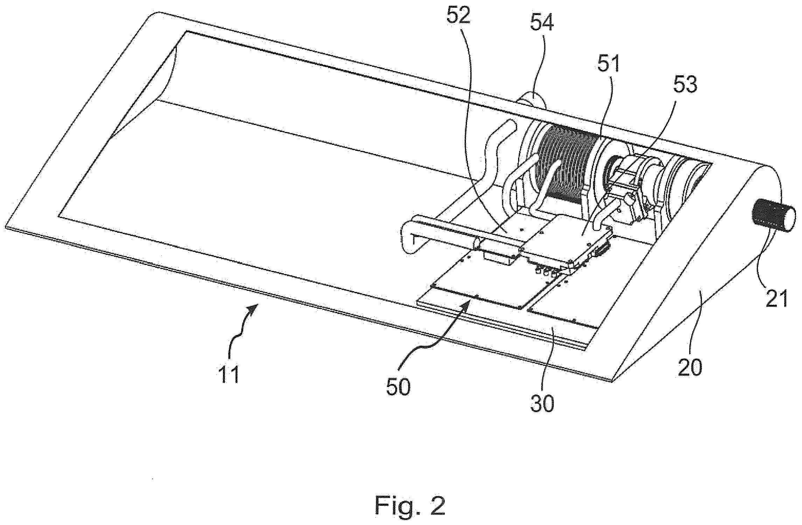

- la figure 2 est une vue schématique en perspective et avec écorché, d'une première de ces surfaces mobiles de vol ;

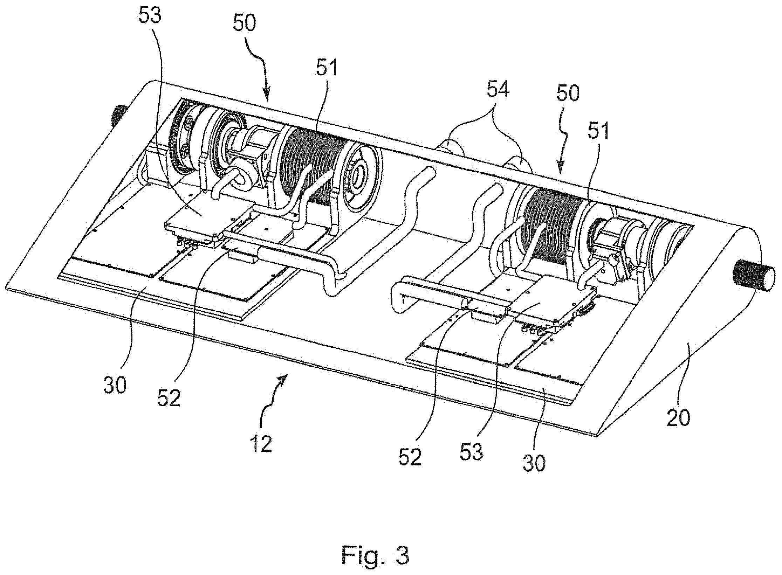

- la figure 3 est une vue schématique en perspective et avec écorché, d'une deuxième de ces surfaces mobiles de vol ;

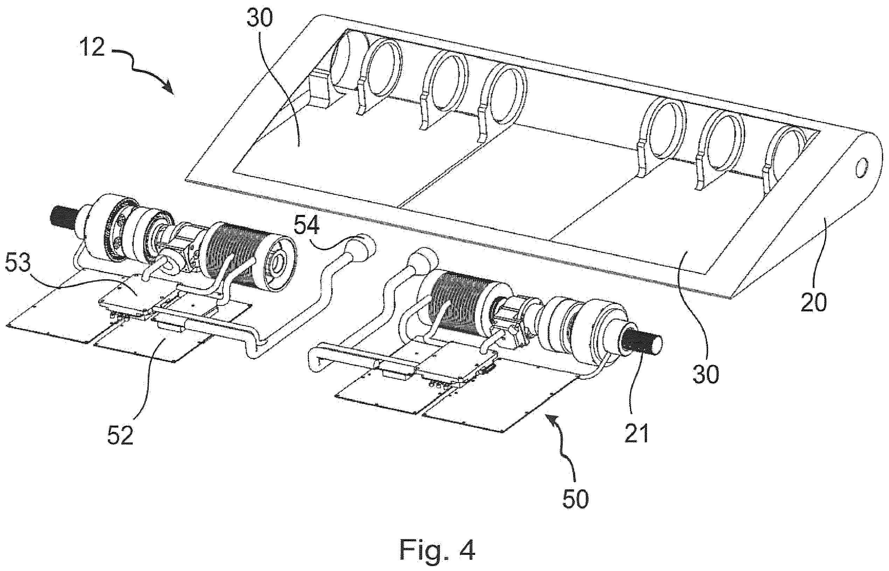

- la figure 4 est une vue schématique en perspective, avec éclaté, de la deuxième surface mobile de vol ;
- la figure 5 est une vue analogue à celle de la figure 4 de la deuxième surface mobile de vol pourvue d'un dispositif selon un premier mode de réalisation pour empêcher une action contraire des actionneurs ;
- la figure 6 est une vue analogue à celle de la figure 5, avec un dispositif anti-contrariété selon un deuxième mode de réalisation ;
- la figure 7 est une vue analogue à la précédente d'une variante basique de ce deuxième mode de réalisation.

### DESCRIPTION DETAILLEE DE L'INVENTION

En référence aux figures, les surfaces mobiles de vol selon l'invention sont ici des ailerons, généralement désignés en 11, 12, articulés aux ailes 1 d'un avion. Bien entendu, l'invention est applicable à d'autres types de surface mobile de vol d'aéronef et par exemple des spoilers, des gouvernes de profondeur, des gouvernes de direction...

Chaque aileron 11, 12 comprend une enveloppe 20 montée pour pivoter sur un axe d'articulation 21 ici sous la forme de deux tronçons séparés coaxiaux s'étendant dans l'enveloppe 20 et ayant des extrémités qui s'étendent en saillie de l'enveloppe 20. Ces extrémités sont fixées aux ailes sans liberté en rotation : lesdites extrémités sont ici pour cette raison cannelées, afin de réaliser la prise de mouvement de l'ensemble. Bien entendu, d'autres éléments d'anti rotation sont utilisables comme le clavetage ou le goupillage. L'enveloppe 20 comprend des membrures ou nervures et des platines 30 formant une structure porteuse, et un revêtement recouvrant la structure porteuse. La structure porteuse est pourvue de paliers, comme des roulements à billes, recevant à pivotement l'axe 21.

Un actionneur généralement désigné en 50 est monté dans l'enveloppe 20 de l'aileron 11 et deux actionneurs 50 sont montés dans l'enveloppe 20 de l'aileron 12.

Chaque actionneur 50 comprend :
- un ensemble moteur 51, comprenant un moteur électrique rotatif et un réducteur, qui est monté dans l'enveloppe 20 et a un arbre de sortie accouplé à l'axe 21, ici par un train d'engrenages, de manière à entraîner l'enveloppe 20 en rotation autour de l'axe 21,
- un circuit de puissance 52 et un circuit de commande 53 pour alimenter et commander le moteur électrique 51,
- des capteurs reliés au circuit de commande 53 notamment pour détecter la position angulaire de l'aileron par rapport à l'axe 21.

L'arbre de sortie de l'ensemble moteur 51 est ici coaxial avec l'axe 21 auquel il est lié en rotation. L'ensemble moteur 51 a un ou plusieurs stators qui sont fixés à la structure porteuse de l'aileron auquel il est incorporé. L'ensemble moteur 51 peut être dépourvu de réducteur ou au contraire comprendre un réducteur (on parle de transmission « Direct-drive » ou « gear-drive »).

Les circuits 52, 53 sont eux aussi logés dans l'enveloppe 20 et sont reliés par des conducteurs électriques à un connecteur 54 débouchant à l'extérieur de l'enveloppe 20. Le connecteur 54 permet d'alimenter les circuits 52, 53 en énergie électrique et de relier le circuit de commande 53 à un calculateur de commande de vol de l'aéronef, non représenté, en charge de l'attitude de l'aéronef. Le calculateur de commande de vol réalise avec les circuits de commande 53 un asservissement par une boucle longue à partir de consignes de position ou de ralliement qui sont utilisées par les circuits de commande 53 pour déterminer des consignes de courant. Les circuits de commande 53 réalisent avec les circuits de puissance 52 un asservissement par une boucle courte à partir des consignes de courant utilisées par les circuits de puissance 52 pour alimenter les bobines des moteurs 51. Le courant d'alimentation détermine le moment du couple généré électriquement (effort).

Au moins le circuit de puissance 52 est solidaire d'une des platines 30. Les platines 30 sont ici en un matériau thermiquement conducteur et sont en contact avec l'enveloppe 20. Ici, le circuit de commande 53 est lui aussi fixé sur la platine 30. De préférence, le ou les stators de l'ensemble moteur 51 sont eux aussi fixés sur la platine 30.

La platine 30 est ici pourvue de paliers montés à rotation sur l'axe 21 et le stator du moteur électrique 51 est fixé à la platine 30.

Les deux actionneurs de l'aileron 12 sont synchronisés pour exercer simultanément les mêmes efforts sur l'axe 21. Avantageusement, chaque actionneur 50 de l'aileron 12 est dimensionné pour pouvoir déplacer seul l'aileron 12 de telle manière que, en cas de défaillance de l'un des actionneurs 50, le pilotage de l'aileron 12 puisse se poursuivre.

L'agencement du dispositif d'actionnement dans l'enveloppe est avantageux car ainsi le moteur et les circuits ne viennent plus encombrer la structure de l'aéronef. Ceci facilite l'implantation de la surface de vol dans l'aéronef en phase d'assemblage/construction et les opérations ultérieures de maintenance. La facilité de montage est globalement augmentée grâce à l'agencement procuré par l'invention.

Chaque surface mobile pourvue de deux actionneurs 50 est pourvue d'un dispositif permettant d'empêcher que les moteurs des actionneurs 50 exercent des efforts antagonistes sur l'enveloppe de la surface mobile de vol. En l'absence d'un tel dispositif, il existe un risque que l'un des moteurs résiste à l'effort exercé par l'autre moteur, parce que, par exemple, il est piloté par erreur dans le sens opposé ou les deux moteurs ont des vitesses ou des couples différents en raison d'un problème de calibration ou d'ajustement des moteurs l'un par rapport à l'autre.

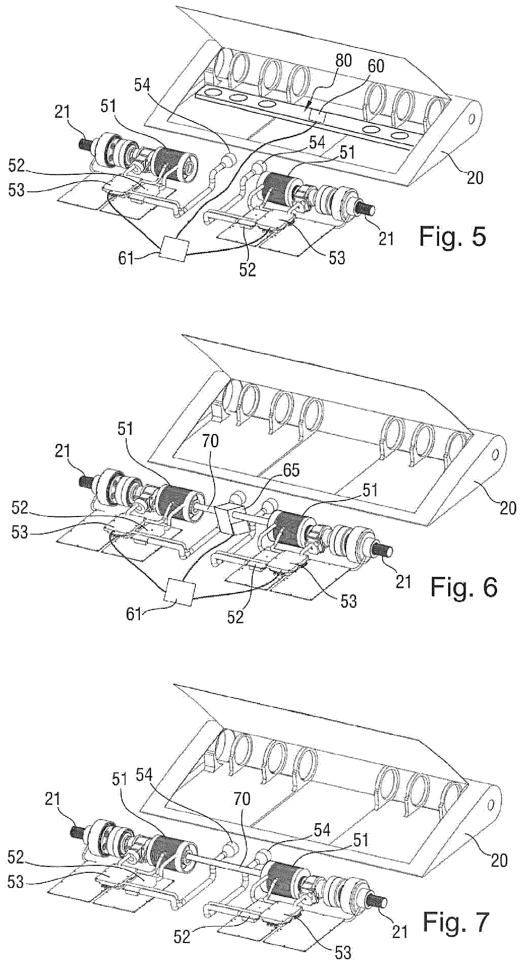

En référence à la figure 5, l'aileron 12 est pourvu d'un tel dispositif qui comprend des jauges de contrainte 60 qui sont fixées sur une platine 80 sur laquelle sont fixés les stators des moteurs et qui est fixée à l'enveloppe 20. Ainsi, les jauges de contrainte 60 sont disposées de manière à détecter les sollicitations subies par la platine 80 et donc sur l'enveloppe 20 de l'aileron 12.

Les jauges de contraintes 60 sont reliées à un circuit de détection 61 qui comprend un processeur programmé pour déterminer à partir des signaux issus des jauges de contraintes 60 si les moteurs des actionneurs 50 exercent des efforts de même intensité et de même sens. Le programme est agencé pour distinguer les sollicitations subies par l'enveloppe 20, qui résultent de l'appui aérodynamique et celles qui résultent des efforts exercés par les moteurs. Le programme est agencé pour déduire l'amplitude et le sens d'une résultante des efforts antagonistes qui permettra de définir une action correctrice des circuits de commande des moteurs en fonction de cette résultante.

Le circuit de détection 61 est relié aux circuits de commande 53 des moteurs pour leur fournir une donnée de correction permettant aux circuits de commande 53 de piloter les moteurs pour qu'ils exercent le même effort. La donnée de correction est utilisée par les circuits de commandes 53 pour agir directement sur la consigne de la boucle d'asservissement de l'alimentation en courant des bobines de chaque moteur. La valeur de consigne d'un des deux moteurs est alors abaissée par autorité de commande : le moteur est mis dans un mode d'amortissement (la consigne de courant est mise à une valeur voisine de zéro) puis la consigne de courant est augmentée de préférence progressivement jusqu'à atteindre une valeur permettant un équilibrage des efforts exercés par les deux moteurs. On notera que le rééquilibrage est effectué directement sur la boucle courte d'asservissement pour avoir un rééquilibrage le plus rapide possible. Le choix du moteur dont la consigne de courant est abaissée est ici effectué par le programme informatique de gestion des commandes du calculateur de commandes de vol. Le programme choisit le moteur en question par exemple en fonction de l'historique des valeurs de courant précédemment enregistrées (le moteur qui a été le plus chargé jusqu'à présent est mis en mode d'amortissement) ou d'autres informations fournies par un système de surveillance de l'état des moteurs. Le calculateur peut choisir en temps réel le moteur à mettre en amortissement ou disposer en mémoire d'une indication de ce moteur (c'est toujours le même moteur qui est mis en amortissement ou c'est alternativement l'un puis l'autre)... En variante, le moteur mis en amortissement est le moteur exerçant l'effort le plus faible. Cette dernière solution est particulièrement simple et rapide.

En référence à la figure 6, le dispositif comprend un organe d'extensométrie 65 traversé par un barreau 70 ayant une extrémité liée en rotation au rotor de l'un des moteurs et une extrémité opposée liée en rotation au rotor de l'autre des moteurs. L'organe d'extensométrie 65 mesure les contraintes en torsion résultant d'une différence entre les efforts fournis par les deux moteurs. L'organe d'extensométrie 65 peut être remplacé par des jauges de contraintes.

L'organe d'extensométrie 65 est relié à un circuit de détection 61 qui comprend un processeur programmé pour déterminer à partir des signaux issus des jauges de contraintes 60 si les moteurs des actionneurs 50 exercent des efforts de même intensité et de même sens.

Cet agencement a l'avantage de nécessiter des traitements plus simples car le barreau 70 est moins soumis aux sollicitations résultant des forces aérodynamiques appliquées sur l'enveloppe 20.

En outre, les contraintes engendrées sur l'enveloppe 20 par les efforts antagonistes des moteurs sont limitées par la présence du barreau 70.

En variante de ce mode de réalisation, comme représenté sur la figure 7, le barreau 70 est dépourvu de jauges de contraintes.

On comprend que, lorsque les moteurs ne sont pas pilotés à la même vitesse, le barreau 70 va transmettre au rotor du moteur le plus rapide l'effort résistant engendré par le moteur le plus lent. Le barreau 70 contribue alors à équilibrer les efforts fournis par les moteurs sur la surface mobile. En outre, lorsque les moteurs sont pilotés dans des sens opposés avec un couple équivalent, les rotors des moteurs ne vont pas tourner. Cette absence de mouvement va être détectée par les capteurs liés aux circuits de commande 53 qui sont agencés pour engendrer une action correctrice correspondante.

Cette variante est plus particulièrement adaptée à des moteurs exerçant un couple relativement faible.

Bien entendu, l'invention n'est pas limitée aux modes de réalisation décrits mais englobe toute variante entrant dans le champ de l'invention telle que définie par les revendications.

En particulier, la surface mobile de vol peut avoir une structure différente de celle décrite.

Le moteur peut être déporté par rapport à l'axe 21 d'articulation de la surface mobile et être relié à l'axe 21 par une transmission mécanique comme un train d'engrenages, une courroie...

L'axe d'articulation et l'arbre de sortie du moteur peuvent être en une seule pièce ou pas. L'arbre de sortie du moteur peut avoir des extrémités en saillie de chaque côté du moteur.

Le moteur peut être linéaire.

Les platines sont facultatives ou seul le moteur peut être fixé sur une platine.

La surface mobile peut comprendre un nombre différent de moteurs.

L'axe d'articulation de l'enveloppe peut être en une ou plusieurs parties.

L'axe d'articulation peut avoir une seule extrémité en saillie de l'enveloppe pour former une surface mobile de type « canard ».

La platine supportant les circuits peut être distincte de la structure porteuse de l'aileron et être rapportée sur l'arbre ou sur les membrures de la surface mobile.

Les circuits peuvent être montés sur une ou plusieurs platines.

Avantageusement encore, les connections électriques entre la surface et l'avion peuvent être réalisées soit en direct (connecteur sur l'extérieur de la surface) soit par des câbles qui passent à l'intérieur d'un des axes de rotation/fixation de la surface sur l'avion.

Avantageusement encore, l'enveloppe comprend un blindage de protection contre les perturbations électromagnétiques. Par exemple, la surface est en matériau composite avec du carbone (carbone chargé, treillis de fibres ou autre). Comme l'enveloppe s'étend autour de l'ensemble moteur et des composants électroniques, elle forme un blindage contribuant à la compatibilité électromagnétique de l'électronique et de la motorisation, ainsi qu'à la protection par rapport à l'environnement (protection foudre par exemple).

Selon une caractéristique avantageuse, l'axe de rotation est creux et au moins un câble électrique s'étend dans l'axe de rotation et est relié à l'un au moins des circuits. De préférence, chacun des deux circuits est relié à un câble s'étendant dans l'axe de rotation. La partie des câbles s'étendant entre la surface mobile et le reste de l'avion est soumis à un travail en flexion lors des mouvements de la surface mobile. Le passage des câbles dans un axe creux évite ce travail en flexion et limite donc la fatigue du câble.

Il peut y avoir un circuit de commande et/ou un circuit de puissance commun aux moteurs ; ou des circuits séparés de commande et/ou de puissance.

En variante, le circuit de commande est agencé pour surveiller un fonctionnement d'au moins une partie de la surface mobile. Cette surveillance est effectuée par exemple par comparaison des valeurs de paramètres électriques du circuit de puissance à des seuils, et/ou en suivant l'évolution de signaux d'au moins un capteur, comme un capteur de température, monté sur le moteur. Il est ainsi possible d'effectuer une surveillance de l'état (« health monitoring ») de la motorisation de la surface mobile.

Le barreau peut être associé à un dispositif extensométrique avec ou sans contact.

Le circuit de commande peut être agencé pour que l'action correctrice comprenne une réduction d'une consigne de courant d'alimentation d'un des moteurs et, de préférence, que la réduction de la consigne de courant d'alimentation d'un des moteurs est suivi d'une augmentation de la consigne de courant au moins dudit moteur jusqu'à équilibrer les efforts exercés par les moteurs.

Le dispositif d'actionnement peut être disposé sur la structure de l'aéronef.

## Revendications

1. Dispositif électromécanique d'actionnement d'une surface mobile de vol (11, 12) ayant une enveloppe (20) articulée à une structure d'un aéronef autour d'un axe de rotation (21), comprenant :
- au moins deux moteurs électriques (51) pour entraîner l'enveloppe en rotation autour de l'axe de rotation,
- un circuit de puissance (52) et un circuit de commande (53) pour alimenter et commander chacun des moteurs,
le dispositif est **caractérisé par**:
- un dispositif de limitation d'efforts antagonistes exercés par les moteurs électriques.

2. Dispositif selon la revendication 1, comprenant un circuit de détection (61) agencé pour déterminer l'amplitude et le sens d'une résultante des efforts antagonistes afin de permettre une action correctrice du circuit de commande des moteurs (51) en fonction de cette résultante.

3. Dispositif selon la revendication 2, dans lequel le circuit de détection (61) est relié à des jauges de contraintes (60) et déduit des signaux des jauges de contraintes l'amplitude et le sens de la résultante des efforts antagonistes.

4. Dispositif selon la revendication 3, dans lequel les jauges de contraintes (60) sont fixées sur une platine (80) sur laquelle sont fixés les stators des moteurs.

5. Dispositif selon la revendication 3, dans laquelle les jauges de contraintes (60) sont fixées sur un barreau (70) liant entre eux et en rotation les rotors des moteurs (51).

6. Dispositif selon l'une quelconque des revendications 2 à 5, dans lequel le circuit de commande (53) est agencé pour que l'action correctrice comprenne une réduction d'une consigne de courant d'alimentation d'un des moteurs (51).

7. Dispositif selon la revendication 6, dans lequel la réduction de la consigne de courant d'alimentation d'un des moteurs (51) est suivie d'une augmentation de la consigne de courant au moins dudit moteur jusqu'à équilibrer les efforts exercés par les moteurs.

8. Dispositif selon la revendication 1, dans laquelle le dispositif comprend un barreau (70) liant entre eux et en rotation les rotors des moteurs (51).

## Patentansprüche

1. Elektromechanische Betätigungsvorrichtung für eine bewegliche Flugoberfläche (11, 12), die eine Haut (20) hat, die an einer Struktur eines Luftfahrzeugs um eine Drehachse (21) angelenkt ist, umfassend:
- mindestens zwei Elektromotoren (51) zum Drehantrieb der Haut um eine Drehachse,
- eine Leistungsschaltung (52) und eine Steuerschaltung (53) zum Versorgen und Steuern jedes der Motoren,
wobei die Vorrichtung **gekennzeichnet ist durch**:
- eine Vorrichtung zur Begrenzung von Gegenkräften, die von den Elektromotoren ausgeübt werden.

2. Vorrichtung nach Anspruch 1, umfassend eine Detektionsschaltung (61), die ausgebildet ist, um die Amplitude und die Richtung einer Resultierenden der Gegenkräfte zu bestimmen, um eine korrigierende Maßnahme der Steuerschaltung der Motoren (51) in Abhängigkeit von dieser Resultierenden zu ermöglichen.

3. Vorrichtung nach Anspruch 2, bei der die Detektionsschaltung (61) mit Dehnungsmesstreifen (60) verbunden ist und aus den Signalen der Dehnungsmesstreifen die Amplitude und die Richtung der Resultierenden der Gegenkräfte herleitet.

4. Vorrichtung nach Anspruch 3, bei der die Dehnungsmesstreifen (60) an einer Platte (80) befestigt sind, an der die Statoren der Motoren befestigt sind.

5. Vorrichtung nach Anspruch 3, bei der die Dehnungsmessstreifen (60) an einem Stab (70) befestigt sind, der die Rotoren der Motoren (51) miteinander und in Drehung verbindet.

6. Vorrichtung nach einem der Ansprüche 2 bis 5, bei der die Steuerschaltung (53) so ausgebildet ist, dass die korrigierende Maßnahme eine Reduzierung eines Versorgungsstromsollwertes eines der Motoren (51) umfasst.

7. Vorrichtung nach Anspruch 6, bei der auf die Reduzierung des Versorgungsstromsollwertes eines der Motoren (51) eine Erhöhung des Stromsollwertes mindestens des genannten Motors folgt, bis die von den Motoren ausgeübten Kräfte ausgeglichen sind.

8. Vorrichtung nach Anspruch 1, bei der die Vorrichtung einen Stab (70) umfasst, der die Rotoren der Motoren (51) miteinander und in Drehung verbindet.

## Claims

1. An electromechanical device for actuating a movable flight control surface (11, 12) having a skin (20) hinged to a structure of an aircraft about a pivot axis (21), the device comprising:
- at least two electric motors (51) for causing the skin to pivot about the pivot axis;
- a power circuit (52) and a control circuit (53) for powering and controlling each of the motors;
the device being **characterized by**:
- a device for limiting opposing forces exerted by the electric motors.

2. A device according to claim 1, including a detector circuit (61) arranged to determine the amplitude and the direction of a resultant of opposing forces so as to enable the motor control circuits (51) to take correcting action as a function of the resultant.

3. A device according to claim 2, wherein the detector circuit (61) is connected to strain gauges (60), and from the signals from the strain gauges it deduces the amplitude and the direction of the resultant of the opposing forces.

4. A device according to claim 3, wherein the strain gauges (60) are fastened on a plate (80) having the stators of the motors fastened thereto.

5. A device according to claim 3, wherein the strain gauges (60) are fastened on a bar (70) connecting the rotors of the motors (51) together in rotation.

6. A device according to any one of claims 2 to 5, wherein the control circuit (53) is arranged so that the corrective action comprises reducing a current feed setpoint for one of the motors (51).

7. A device according to claim 6, wherein reduction of the current feed setpoint for one of the motors (51) is followed by increasing the current setpoint, at least for said motor, until the forces exerted by the motors are balanced.

8. A device according to claim 1, wherein the device includes a bar (70) connecting the rotors of the motors (51) together in rotation.
